# EUROPEAN PATENT SPECIFICATION

(11) **EP 2 102 510 B1**
(45) Date of publication and mention of the grant of the patent: **10.08.2011**
(21) Application number: 07845323.0
(22) Date of filing: 04.12.2007
(51) Int. Cl.: F16B 2/20, E04B 5/02, F16B 5/06

(54) **NON-ROTATING PANEL CLIP**
NICHT DREHBARE PLATTENKLEMME
CLIP NON PIVOTANT POUR PANNEAU

(30) Priority: 22.12.2006 AU 2006907282 P
(43) Date of publication of application: 23.09.2009
(73) Proprietor: Advanced Building Systems Pty Ltd., Revesby, New South Wales 2212 (AU); Thrift, Philip John, Revesby, NSW 2212 (AU)
(72) Inventor: METHAM, Barry, Revesby, NSW 2212 (AU)
(74) Representative: Lacey, Dean Andrew
(86) International application number: PCT/AU2007/001875
(87) International publication number: WO 2008/077183

(56) References cited:
- US-A- 3 206 123
- US-A- 5 664 392
- US-A1- 2006 032 180
- US-A1- 2006 093 459
- PATENT ABSTRACTS OF JAPAN & JP 08 277593 A (ASAHI CHEM IND CO LTD) 22 October 1996

## Description

This invention relates to the method of building construction using prefabricated and tilt-up concrete panels and in particular to an improved method and fitting for attaching and fixing such concrete panels to structural steelwork.

### Background to the Invention

Pre-cast concrete panels in the form of tilt-up panels and other forms of pre-cast constructional members are enjoying an ever increasing penetration into the building and construction industry due to their versatility, reliability and structural strength. In addition, the very rapid and economical methodologies available for erecting such precast concrete panels allow the very rapid and reliable erection of substantial constructions.

Typically, pre-cast concrete panels, including tilt-up panels are fastened to structural steel work, which is formed so as to provide a framework and supporting structure for a building in question. The pre-cast concrete panels effectively function as in-fill or walls, floors etc., and the attachment of the pre-cast concrete panels to the structural steelwork is the subject of the current patent application.

In the past, fastening and fixing of pre-cast concrete panels to structural steel work is accomplished by first welding a small clip or tab to the structural steelwork on a number of positions so as to provide a series of projecting tabs which can be used as a means of bolting or fastening concrete panels onto the structural steelwork without the need to drill or provide holes in the structural steelwork which would otherwise compromise the integral strength of the structural steelwork and generally necessitate the incursion of locking bolts very close to the edge of the pre-cast concrete panels. The use of welded tabs or clips to the structural steelwork allows the provision of a bolt to be inserted and attached to the concrete panel at a distance from the edge thereof and this provides a means for attaching the concrete panels to the structural steelwork.

Whilst it might be conceivable to use panel clips in the currently adopted methodologies without welding the clip to the structural steelwork, the practicalities of construction and erection are faced with a variety of problems including the uncontrolled rotation of the clip once it is drawn into abutment with the concrete panel so as to sandwich the structural steelwork between the clip and the panel. In addition, the logistical problems of assembly with workers having to man-handle and orientate the clips often in elevated and precarious positions, has seen the current methodologies adopted where the panel clips are welded onto the structural steelwork after erection thereof as a separate step after the pre-cast panels are drawn up into engagement with the structural steelwork and bolts are secured through the tabs into the concrete panels to effect the attachment of fixing of the concrete panels to the structural steelwork.

The above described methodologies involve the separate step of an operator welding the panel clips to the structural steelwork.

It would be desirable to provide an improved method and fittings which would overcome the previously described difficulties and limitations with the currently used panel clips.

The pre-characterising features of claim 1 can be derived from US 3,206,123.

### Statements of the Invention

In one aspect the invention provides a panel clip for fixing a preformed concrete panel to structural steelwork said clip comprising a linear elongate body terminating in a downward deflecting lip, said body including an elongate aperture formed in said linear body for receiving a fastening device wherein said clip includes a non load bearing projecting tooth protruding in a downward direction corresponding to said deflecting lip and formed intermediate of the end of said lip and said aperture for engaging an oversized rebate in said preformed concrete panel and preventing said clip from rotating during tightening of said fastening device whilst allowing lateral positioning of said clip during tightening.

The projecting tooth can be formed from any one of a number of preferred configurations including a projecting tooth formed on and protruding from the lip. Alternatively, the projecting tooth can be formed from the punch waste or stamping waste of the aperture with the stamping waste being cause to form around so as to project in a downward direction from the clip. In another embodiment the projecting tooth can be formed from a separate piece of punctual stamp waste formed from the lip itself.

An alternative embodiment of the projecting tooth is provided where the projecting tooth is formed as an elongate partial extension or tab extending from the underside of the clip body positioned so as to encompass the aperture.

Preferably the angle of deflection of the lip is about 5° or sufficient to accommodate the thickness of said structural steelwork and/or allow for compression of said clip during fixing of said concrete panel.

The aperture may be an elongate slot to accommodate slippage and movement during fixture.

The rebate formed in the concrete panel is preferably cruciform.

The clip is preferably formed of mild steel and hot dip galvanised.

In another aspect the invention provides a method of fixing pre-cast concrete panels and the like to steel structural work comprising fitting a panel clip as previously described to a pre-cast panel formed with a rebate wherein said clip is bolted or fastened to a ferrule in said panel and said clip is prevented from rotating during tightening by the co-operation of said tooth with said rebate.

### Detailed Description of the Invention

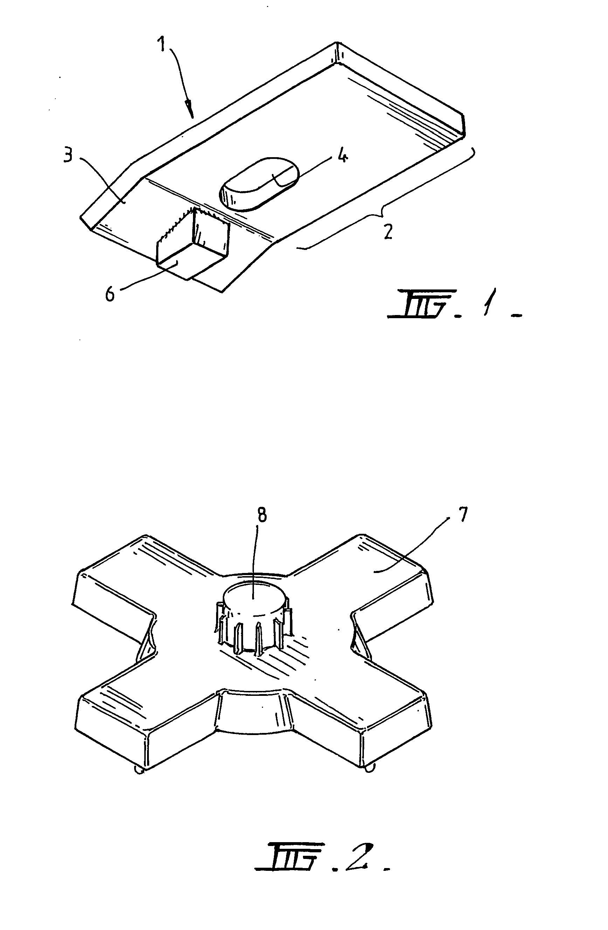

The invention will now be described in more detail with reference to one particularly preferred embodiment as shown in Figures 1 through to 6:
Figure 1 shows an under view of the clip.
Figure 2 shows a rebate former.
Figure 3 shows an exploded view of the clip fitting a panel to structural steel.
Figure 4 shows a side view of the clip fixing a panel to structural steel.
Figure 5 shows an alternative embodiment of the clip where the interlocking tab is produced by punching the aperture and bending a portion of the clip underneath so as form the tab.
Figure 6 shows yet another embodiment with the interlocking tab being produced by slitting and then bending from a rear portion of the panel clip.
Figure 7 shows yet another embodiment of the clip where the interlocking tab is welded onto the clip around the slotted hole to sit in a square recess formed in the panel.

### Legend

- 1.: Clip
- 2.: Body
- 3.: Lip
- 4.: Aperture
- 5.: Fastening device
- 6.: Tooth
- 7.: Cruciform arms
- 8.: Central plug
- 9.: Ferrule
- 10.: Panel
- 11.: Rebate

- 12.: Structural steel

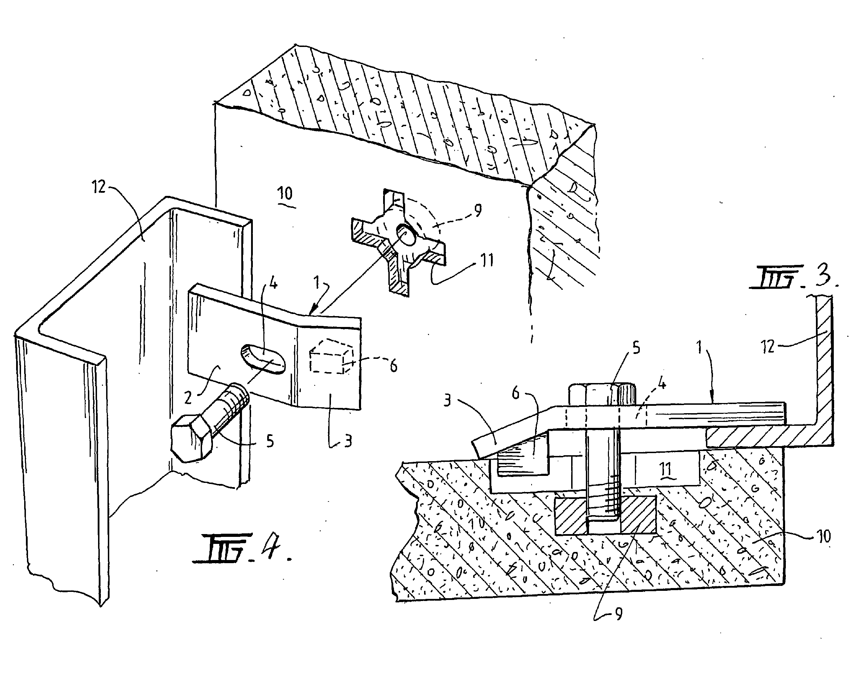

Referring to the figures, the invention provides an improved panel clip for fixing a concrete panel 10 to preformed structural steelwork 12, shown in figures 3 and 4. The clip 1 comprises the relatively short and linear elongate body 2, terminating in a downwardly deflected short lip 3. The clip 1 provides a compact fastening device of similar proportions and materials to prior art clips. The body 2 includes an elongate slot as an aperture 4, which is formed in the straight or linear body part of the clip 2, toward the middle of the clip 1 and generally abutting the region of the body 2 which transforms into the downwardly deflecting lip 3. In a first embodiment the downwardly deflecting lip includes a short projecting tooth 6, protruding from the underside of the lip 3 in the downward direction adopted by the lip 3 relative to the body 2 of the clip 1. The angle of deflection of the lip 3 relative to the body is shown in the figures but would generally be expected to be in the order of about 5° or an angle selected to accommodate the thickness of the structural steel 12 as can be seen in figure 3.

Referring again to figures 3 and 4 the panel clip of the invention is adapted to interact with a rebate 11, preformed in the panel 10 during casting and construction of the panel. During casting and construction of the panel, a rebate former as shown in figure 2 is used, so as to provide a cruciform rebate by virtue of the four cruciform arms 7 of the former in addition to a central plug 8. In this manner, the rebate former provides four options for engagement with the panel clip of the invention and thereby provides complete versatility during construction of the pre-cast panels which can then be fitted to structural steel using the clip of the invention in a variety of orientations.

In use, the panel clip of the invention allows pre-cast concrete panels incorporating the rebate to be raised and positioned in relation to the structural steel formations wherein the positioned panels can then be fitted and fixed to the structural steel by use of the panel clips of the invention where the user would fit a clip to the panel, such that the body of the clip would sandwich the structural steel member between the panel and the body per se., with the lip 3 and tooth 6 of the clip, being placed within the rebate 11 formed in the concrete panel. Once the clip is positioned, a fasting means 5 or bolt can then be passed through the elongate aperture or slot 4 and fitted to a threaded insert or ferrule 9, positioned within the panel 10. The bolt or fastener is then tightened, drawing the body of the clip down onto the structural steel member and tightly and snugly sandwiching the structural steel between the panel and the clip thereby securely fixing the panel to the structural steel. The inclined lip of the clip provides a measure of compliance and sprung tension to ensure the bolt does not loosen or come undone. As an additional security measure, the panel clip of the invention can be used in conjunction with the applicant's SEKURELOK™ washer as detailed in co-pending patent application PCT/AU2006/001371.

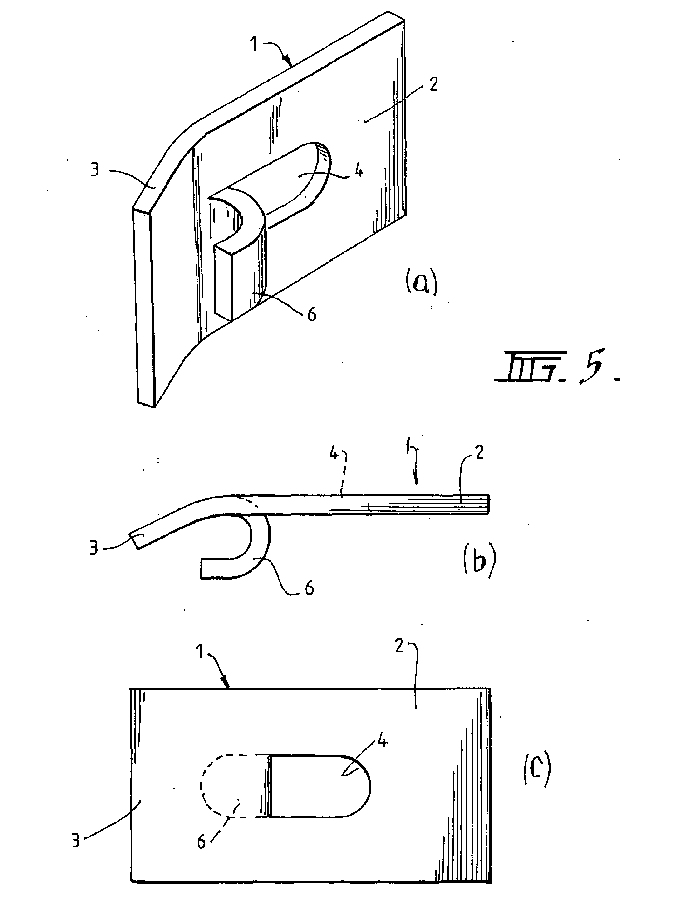

Referring now to Figures 5, 6 and 7, alternative configurations of the panel clip of the invention are shown where different methods of forming the tooth 6 are provided. Firstly referring to Figure 5, the projecting tooth 6 is shown as being formed from the punch waste material projected from the clip body 2 during formation of the aperture 4. In this particular embodiment, a very economical method is provided for the formation of the projecting tooth without requirement for a separate provision and fitting of a tooth to the downward deflected short-lip 3. This particular embodiment of the invention provides for the bending and formation of the tooth into a position commensurate with the position of the tooth as shown and previously described with reference to Figure 1.

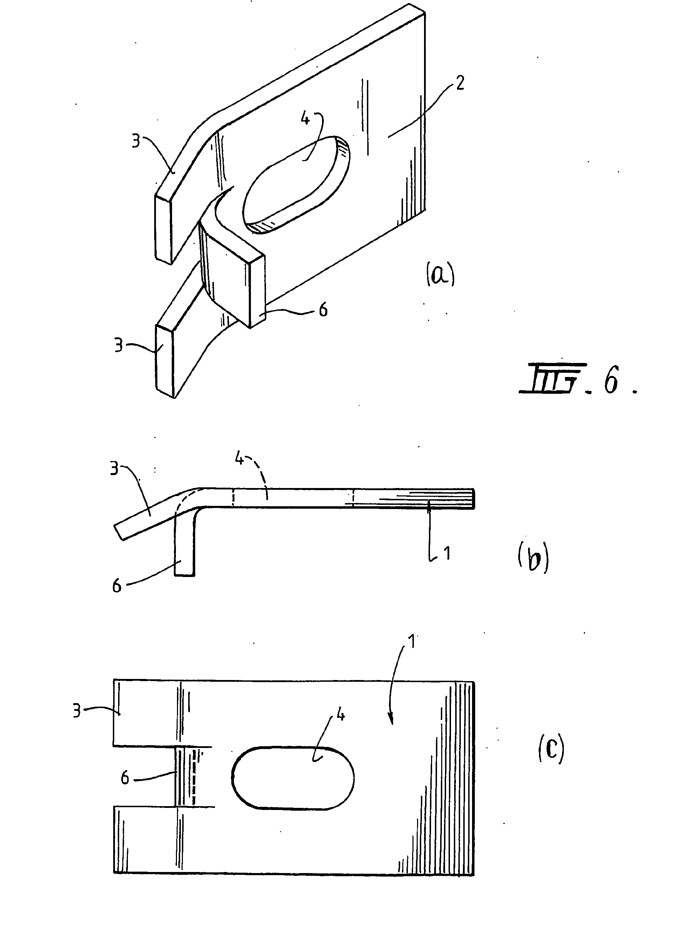

Referring now to Figure 6, an alternative method of forming the projecting tooth 6 is shown where this particular embodiment provides for the preparation and formation of the tooth as punch waste material resulting from the pressing of the lip from within the width of the downward deflected lip 3. Again, this method of forming the projecting lip does not require the separate step of forming and fixing the tooth to the downward deflecting lip and provides some economies in manufacture.

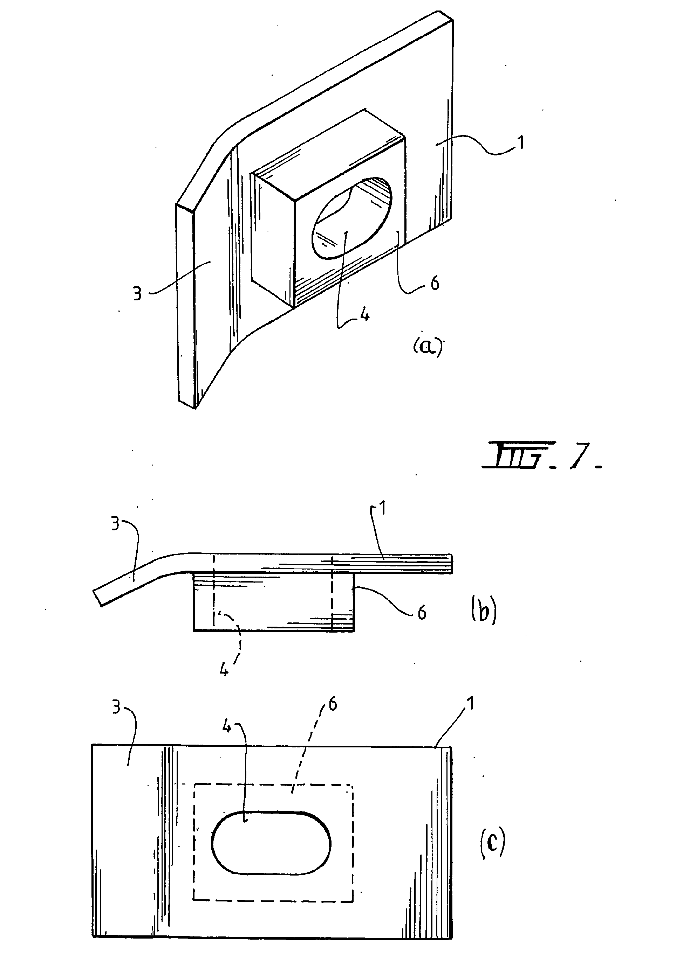

Referring now to Figure 7, another embodiment providing an alternative method of forming the tooth 6 is shown, where the tooth in this particular embodiment takes the form of an elongate tab 6 extending from the underside of the body 1. The positioning of the elongate tab correlates with the position of the aperture 4 so as to encompass the aperture so as to ensure the adequate provision of an anti-rotational function of the clip relative to the position of the fastening device.

Among the advantages of the clip of the current invention, are its ability to be securely fixed to structural steel without the need to weld the clip onto the steel. The provision of the projecting tooth and its interaction with the rebate formed in the panel, ensures that the clip does not rotate or move outside its specified fitting configuration. The elongate slot and cruciform preparation of the rebate ensures that the panel clip is readily fitted and does not provide an impediment or require unnecessary alignment with a threaded insert or ferrule 9 positioned to be in the panel 10. In this manner, the clip of the invention is easy, efficient and safe to use in the sometimes exposed environments required for constructions of this type.

It will be appreciated by persons skilled in the art that numerous variations and/or modifications may be made to the invention as shown in the specific embodiments without departing from the scope of the invention as broadly described. The present embodiments are, therefore, to be considered in all respects as illustrative and not restrictive.

## Claims

1. A panel clip (1) for fixing a preformed concrete panel (10) to structural steelwork (12) said clip (1) comprising a linear elongate body (2) terminating in a downward deflecting lip (3), **characterised in that** said body (2) includes an elongate aperture (4) formed in said linear body (2) for receiving a fastening device (5) wherein said clip (1) includes a non load bearing projecting tooth (6) protruding in a downward direction corresponding to said deflecting lip (3) and formed intermediate of the end of said lip (3) and said aperture (4) for engaging an oversized rebate (11) in said preformed concrete panel (10) and preventing said clip (1) from rotating during tightening of said fastening device (5) whilst allowing lateral positioning of said clip (1) during tightening.

2. A clip according to claim 1, wherein said projecting tooth (6) protrudes from said lip (3).

3. A clip according to claim 1, wherein said projecting tooth (6) is formed from the punch waste of said aperture (4).

4. A clip according to claim 1, wherein said projecting tooth (6) is formed from the punch waste of an aperture formed in said lip.

5. A clip according to claim 1, wherein said projecting tooth (6) is formed as an elongate tab extending from the underside of said body encompassing said aperture.

6. A clip according to any one of claims 1 to 5, wherein said deflected lip (3) is deflected at an angle of about 5° or sufficient to accommodate the thickness of said structural steelwork.

7. A clip according to any one of claims 1 to 6, wherein said aperture (4) is an elongate slot.

8. A clip according to any one of claims 1 to 7, wherein said clip (1) is formed of mild steel and is hot dip galvanized.

9. A method of fixing precast concrete panels (10) and the like to structural steel work (12) comprising fitting a panel clip (1) according to any one of claims 1 to 8, to said precast concrete panel (10) wherein said precast concrete panel (10) is formed with a rebate (11) for receiving said clip tooth (6) and wherein said clip (1) is fastened to said panel (10) and prevented from rotating during tightening by cooperation of said tooth (6) with said rebate (11).

## Patentansprüche

1. Plattenklemme (1) zur Befestigung einer vorgeformten Betonplatte (10) an einer Stahlbaustruktur (12), wobei die Klemme (1) einen linearen länglichen Körper (2) aufweist, der in einer sich nach unten abknickenden Lippe (3) endet, **dadurch gekennzeichnet, dass** der Körper (2) eine längliche Öffnung (4), welche in dem linearen Körper zur Aufnahme einer Befestigungsvorrichtung (5) gebildet ist aufweist, wobei die Klemme (1) einen nicht Last tragenden vorragenden Zahn (6) aufweist, welcher in einer nach unten weisenden Richtung korrespondierend zu der abknickenden Lippe (3) vorragt und zwischen dem Ende der Lippe (3) und der Öffnung (4) zur Verbindung mit einer überdimensionierten Fuge (11) in der vorgeformten Betonplatte (10) gebildet ist, und welche verhindert, dass die Klemme (1) sich während des Anziehens der Befestigungsvorrichtung (5) dreht, während sie eine seitliche Positionierung der Klemme während des Anziehens erlaubt.

2. Klemme nach Anspruch 1, wobei der vorragende Zahn (6) von der Lippe (3) vorragt.

3. Klemme nach Anspruch 1, wobei der vorragende Zahn (6) aus dem Stanzüberschuss der Öffnung (4) gebildet ist.

4. Klemme nach Anspruch 1, wobei der vorragende Zahn (6) aus dem Stanzüberschuss einer in der Lippe geformten Öffnung gebildet ist.

5. Klemme nach Anspruch 1, wobei der vorragende Zahn (6) als länglicher die Öffnung umgebender, sich von der Unterseite des Körpers erstreckender Lappen geformt ist.

6. Klemme nach einem der Ansprüche 1 bis 5, wobei die abgeknickte Lippe (3) um einen Winkel von etwa 5° oder ausreichend abgeknickt ist, um die Dicke der Stahlbaustruktur aufzunehmen.

7. Klemme nach einem der Ansprüche 1 bis 6, wobei die Öffnung (4) ein länglicher Schlitz ist.

8. Klemme nach einem der Ansprüche 1 bis 7, wobei die Klemme (1) aus einem weichen Stahl gebildet ist und feuerverzinkt ist.

9. Verfahren zum Befestigen von vorgegossenen Betonplatten (10) und dergleichen an einer Stahlbaustruktur (12), mit dem Schritt Befestigen einer Plattenklemme (1) gemäß einem der Ansprüche 1 bis 8 an der vorgegossenen Betonplatte (10), wobei die vorgegossene Betonplatte (10) mit einer Fuge (11) zur Aufnahme des Klemmenzahns (6) ausgebildet ist, und wobei die Klemme (1) an der Platte (10) befestigt wird und durch Zusammenwirkung des Zahns (6) mit der Fuge (11) während des Anziehens an einer Drehung gehindert wird.

## Revendications

1. Attache de panneau (1) pour fixer un panneau de béton préformé (10) à un ouvrage en acier structurel (12), ladite attache (1) comprenant un corps allongé linéaire (2) s'achevant par une lèvre s'infléchissant vers le bas (3), **caractérisée en ce que** ledit corps (2) comprend une ouverture allongée (4) formée dans ledit corps linéaire (2) de façon à recevoir un dispositif de fixation (5), ladite attache (1) comprenant une dent saillante ne portant pas de charges (6) faisant saillie dans une direction vers le bas correspondant à ladite lèvre s'infléchissant (3), et formée entre l'extrémité de ladite lèvre (3) et ladite ouverture (4) de façon à venir en prise avec une feuillure surdimensionnée (11) dans ledit panneau de béton préformé (10) et à empêcher ladite attache (1) de tourner durant le serrage dudit dispositif de fixation (5), tout en permettant un positionnement latéral de ladite attache (1) durant le serrage.

2. Attache selon la revendication 1, dans laquelle ladite dent saillante (6) fait saillie à partir de ladite lèvre (3).

3. Attache selon la revendication 1, dans laquelle ladite dent saillante (6) est formée à partir du résidu de poinçonnage de ladite ouverture (4).

4. Attache selon la revendication 1, dans laquelle ladite dent saillante (6) est formée à partir du résidu de poinçonnage d'une ouverture formée dans ladite lèvre.

5. Attache selon la revendication 1, dans laquelle ladite dent saillante (6) est formée sous la forme d'une patte allongée s'étendant à partir de la face inférieure dudit corps englobant ladite ouverture.

6. Attache selon l'une quelconque des revendications 1 à 5, dans laquelle ladite lèvre infléchie (3) est infléchie d'un angle d'environ 5°, ou suffisant pour s'adapter à l'épaisseur dudit ouvrage en acier structurel.

7. Attache selon l'une quelconque des revendications 1 à 6, dans laquelle ladite ouverture (4) est une fente allongée.

8. Attache selon l'une quelconque des revendications 1 à 7, dans laquelle ladite attache (1) est formée en acier doux et est galvanisée par trempage à chaud.

9. Procédé de fixation de panneaux de béton précoulés (10), et analogues, à un ouvrage en acier structurel (12), comprenant la disposition d'une attache de panneau (1) selon l'une quelconque des revendications 1 à 8, sur ledit panneau de béton précoulé (10), dans lequel ledit panneau de béton précoulé (10) est formé avec une feuillure (11) pour recevoir ladite dent d'attache (6), et dans lequel ladite attache (1) est fixée audit panneau (10) et empêchée de tourner durant le serrage par coopération de ladite dent (6) avec ladite feuillure (11).
